(19) Europäisches Patentamt
European Patent Office
Office européen des brevets

(11) Veröffentlichungsnummer : **0 369 103 B1**

(12) **EUROPÄISCHE PATENTSCHRIFT**

(45) Veröffentlichungstag der Patentschrift :
**30.09.92 Patentblatt 92/40**

(51) Int. Cl.⁵ : **G01N 27/416, C25D 21/12**

(21) Anmeldenummer : **89109687.7**

(22) Anmeldetag : **30.05.89**

(54) **Prüfung von Elektroden mit Aktivierungsschichten.**

(30) Priorität : **03.11.88 DE 3837290**

(43) Veröffentlichungstag der Anmeldung :
**23.05.90 Patentblatt 90/21**

(45) Bekanntmachung des Hinweises auf die
Patenterteilung :
**30.09.92 Patentblatt 92/40**

(84) Benannte Vertragsstaaten :
**AT BE DE ES FR GB IT LU NL SE**

(56) Entgegenhaltungen :
**EP-A- 0 088 192
WO-A-88/09053
GB-A- 1 081 858
SURRACE TREATMENT TECHNOLOGY AB-
STRACTS, Band 28, Nr. 5, September-Oktober
1986, Seite 256, Zusammenfassung E; L.N.
GUREVA et al.: "Anode for electrodeposition
of zinc from sulphate solution"**

(73) Patentinhaber : **Heraeus Elektrochemie GmbH
Heraeusstrasse 12 - 14
W-6450 Hanau (DE)**

(72) Erfinder : **Kotowski, Stephan, Dr.
Stadtgraben 12
W-6453 Seligenstadt (DE)**
Erfinder : **Busse, Bernd, Dr.
Graupnerweg 40
W-6100 Darmstadt (DE)**
Erfinder : **Donnerhak, Bernd
Friedrich-Ebert-Strasse 44
W-6457 Maintal 1 (DE)**

(74) Vertreter : **Grimm, Ekkehard
Heraeus Holding GmbH Heraeusstrasse 12 -
14
W-6450 Hanau/Main (DE)**

**Beschreibung**

Die Erfindung betrifft ein Verfahren zur Sichtprüfung einer mit einer Aktivierungsschicht versehenen, im wesentlichen ebenen Elektrode für elektrochemische Prozesse, insbesondere einer Anode für galvanische Verzinkungsanlagen für Stahlbänder, zur Ermittlung desaktivierter Oberflächenbereiche sowie eine Vorrichtung zur Durchführung des Verfahrens.

Bei der galvanischen Verzinkung von Stahlbändern, die beispielsweise zur Herstellung von verzinkten Autokarosserien dienen, werden auch Titananoden, die mit Platinmetalloxiden beschichtet sind, eingesetzt. Die Titananoden verlieren nach einiger zeit ihre Aktivität und müssen dann nach ihrem Ausbau reaktiviert werden. Hierzu muß die gesamte Verzinkungsanlage abgestellt werden, wodurch die Produktion vorübergehend zum Erliegen kommt. Daher ist es wünschenswert, bei einem - ohnehin aus anderen Gründen - geplanten Stillstand der Anlage beurteilen zu können, ob die Anoden bis zum nächsten geplanten Stillstand halten werden, oder ob sie sicherheitshalber gleich auszutauschen sind.

Zur Beurteilung, ob die Anoden noch aktiv sind, werden gegenwärtig die folgenden Methoden benutzt:

a) Messung der Schichtdicke der Aktivitätsschicht mittels Röntgenfluoreszenzen (nur möglich während eines Stillstandes). Dieses Verfahren ist aufgrund seiner Langwierigkeit in der Praxis kaum bei allen Anoden während eines Stillstandes durchzuführen. Infolge Passivität unter der Aktivschicht können die Anoden auch trotz hoher Restschichtdicke inaktiv sein. Eine Messung ist nur auf Stellen mit einem Durchmesser von bis zu 5 cm möglich. Zur Beurteilung einer gesamten Fläche von beispielsweise 1 m² müssen viele Einzelmessungen gemacht und ausgewertet werden.

b) Messung der Potentiale (nur möglich während eines Stillstandes). Auch hier gestattet das Verfahren aufgrund seiner Langwierigkeit nicht, alle Anoden während eines Stillstandes zu messen. Es ist ebenfalls nur eine punktweise Messung möglich.

c) Abschalten einzelner Anoden während des Betriebs. Bei diesem Verfahren wird die Schichtdicke des aufgebrachten Zinks kontinuierlich gemessen. Ist sie ungleichmäßig, so werden einzelne Anoden abgeschaltet. Wird die Auflage dadurch gleichmäßiger, so gelten diese Anoden als nicht mehr in Ordnung. Das Verfahren kann nicht in allen Anlagen benutzt werden. Es gibt auch Schichtungsgleichmäßigkeiten, die nicht auf desaktivierte Anoden zurückzuführen sind.

d) Verzinkung bei stehendem Band. Wird das Stahlband, das im normalen Betrieb mit typischerweise 1 m/sec Geschwindigkeit durch die Anlage läuft, angehalten, so ergibt sich eine Zinkverteilung auf dem Band, die der Anodenaktivität entspricht. Aus Sicherheitsgründen wird in der Praxis sofort der Strom abgeschaltet, sobald das Band steht. Zur Durchführung des genannten Verfahrens müssen alle Sicherheitstestvorkehrungen außer Kraft gesetzt werden. Das Verfahren ist sehr teuer und kann nur ausnahmsweise durchgeführt werden.

Der bisherige Stand der Technik läßt somit keine sinnvolle Möglichkeit zu, schnell eine Entscheidung zu fällen, ob eine bestimmte Anode (oder ein Segment davon) einer Reaktivierung bedarf oder noch bis zum nächsten geplanten Stillstand weiterbetrieben werden kann.

Die Erfindung stellt sich die Aufgabe, während eines kurzzeitigen Stillstandes einer galvanischen Verzinkungsanlage komplette Anoden nach deren kurzzeitigem Ausbau in einer Testzelle einer Sichtprüfung zu unterziehen, bei der eine eventuelle Desaktivierung von Bereichen der Aktivierungsschicht erkennbar gemacht wird.

Die Aufgabe wird erfindungsgemäß durch die kennzeichnenden Merkmale des Anspruchs 1 gelöst. In einer Vorrichtung zur Durchführung des erfindungsgemäßen Verfahrens ist in einer trogförmigen Elektrolysezelle mit quaderförmigem Innenraum an zwei sich gegenüberliegenden Tragwänden ein aus Anode und Kathode bestehendes Elektrodenpaar angeordnet, zwischen denen eine Halterung für die zu testende Anode angeordnet ist. Weiterhin ist eine Beleuchtungsvorrichtung zur Ausleuchtung der der Kathode zugewandten aktiven Schicht der Anodenplatte vorgesehen.

Die Erfassung der bei fließendem Strom sich bildenden Gasblasen erfolgt durch ein in der seitlichen Tragwand eingebautes Fenster mit Hilfe einer Video-Kamera.

Als besonders vorteilhaft erweist sich die Möglichkeit, eine Prüfung der Aktivierungsschicht der Anode ohne Zerlegung in ihre Einzelsegmente vorzunehmen, so daß eine kurzzeitige Unterbrechung des Betriebes einer Verzinkungsanlage für Testzwecke ausgenutzt werden kann. Durch Einsatz eines chemisch nicht aggressiven Elektrolyten, wie z. B. einer Natriumsulfatlösung läßt sich eine einfache und rasche Handhabung erzielen.

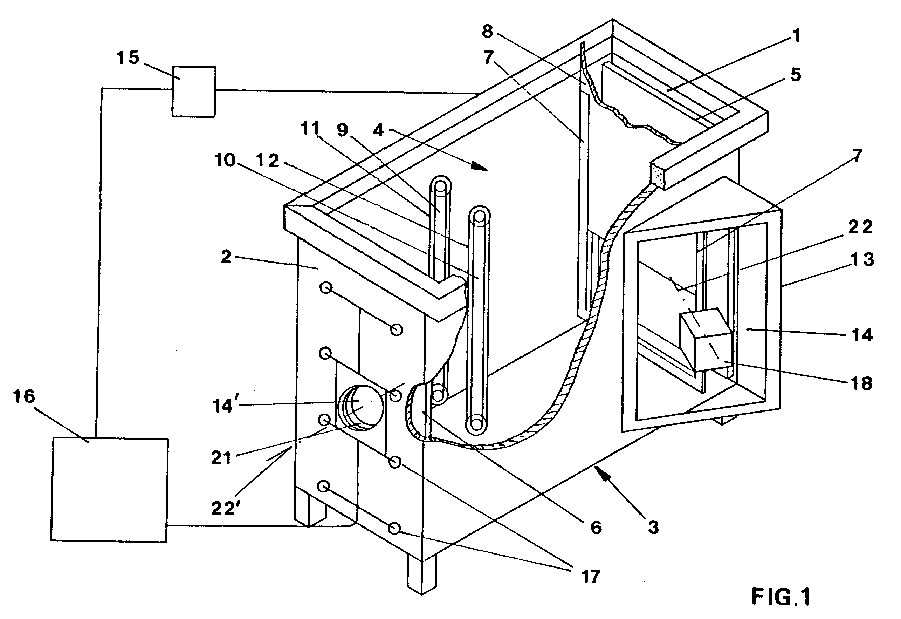

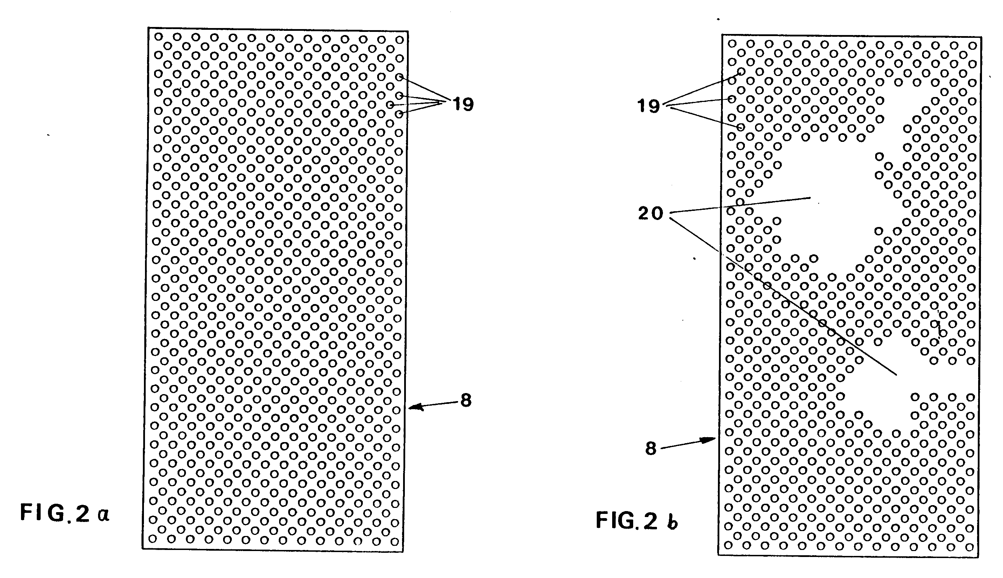

Im folgenden ist der Gegenstand der Erfindung anhand der Figuren 1, 2a und 2b näher erläutert. Figur 1 zeigt eine zwecks besserer Anschaulichkeit teilweise aufgebrochen dargestellte Elektrolysezelle, während die Figuren 2a, 2b schematisch die Gasblasenentwicklung für eine intakte Aktivierungsschicht und für eine Elektrode mit desaktivierten Bereichen zeigen.

Gemäß Figur 1 sind an den sich gegenüberliegenden Wänden 1, 2 einer Elektrolysezelle 3 mit quaderför-

2

migem Innenraum 4 jeweils eine ebene rechteckige Anode 5 und eine ebene, rechteckige Kathode 6 angeordnet. Im Bereich der Anode 5 ist eine elektrisch isolierte Halterung 7 mit einem U-förmigen Aufnahmeprofil vorgesehen, in die von oben die zu testende Anode 8 eingeführt werden kann. Die aktivierte Elektrodenfläche befindet sich dabei auf der der Kathode 6 zugewandten Seite. Die Anode 8 ist dabei zwecks besserer Übersicht nur bruchstückhaft dargestellt. Zwischen der zu testenden Anode 8 und der fest eingebauten Kathode 6 befindet sich eine Beleuchtungsvorrichtung mit zwei langgestreckten rohrförmigen Lichtquellen 9, 10, die ihrerseits von transparenten Schutzrohren 11, 12, beispielsweise aus Quarzglas, umgeben sind. Zwischen den Lichtquellen 9, 10 und den Schutzrohren wird zur Kühlung der Lampen Preßluft geleitet.

Im Bereich der Halterung 7 weist die Seitenwand des Troges 3 ein seitlich angebrachtes prismatisch geformtes Gehäuse 13 auf, das ein gegenüber dem Gehäuse abgedichtetes Sichtfenster 14 enthält, welches die Beobachtung der in der Halterung befindlichen Anode ermöglicht. Die Ebene des Sichtfensters 14 schließt dabei mit der von der Halterung 7 vorgegebenen Ebene der zu testenden Anode 8 einen Winkel im Bereich von 55 bis 75° ein.

Anode 5 und Kathode 6 sind über eine Schaltvorrichtung 15 mit einer Gleichspannungsquelle 16 verbunden. Die zugehörigen Stromanschlüsse der Kathode sind mit Bezugsziffer 17 bezeichnet. Die Anordnung entspricht einer bipolaren elektrochemischen Zelle, bei der die der Anode 5 zugekehrte Rückseite der zu testenden Anode 8 als Kathode arbeitet, während der der Kathode 6 zugewandte Teil der zu testenden Anode 8 anodisch betrieben wird. Vor dem Sichtfenster 14 ist eine hier nur schematisch dargestellte Videokamera 18 angeordnet, deren optische Achse 22 auf die zu testende Anode 8 gerichtet ist.

Als Elektrodenmaterialien für die fest eingebauten Elektroden 5, 6 wird Titan verwendet, wobei die zu testende Anode 8 ebenfalls aus Titan bestehen kann. Die fest eingebaute Anode 5 ist ebenso wie die zu testende Anode 8 mit einer Aktivierungsschicht versehen.

Als Material für den Trog 3 wird vorzugsweise Polyvinylchlorid verwendet. Das seitlich angebrachte prismatisch geformte Gehäuse 13 besteht ebenfalls aus PVC, während für das Sichtfenster 14 Verbundglas verwendet wird. Als Elektrolyt wird vorzugsweise eine Natriumsulfatlösung eingesetzt, da diese Lösung mangels chemischer Aggressivität zu einer ungefährlichen und raschen Handhabung der erfindungsgemäßen Vorrichtung beiträgt. Dabei tritt während des Testvorganges eine reine Sauerstoffblasenentwicklung auf. Es ist auch möglich andere chloridionenfreie Elektrolyte reinzusetzen, so daß eine mit Gefahren verbundene Chlorgasentwicklung vermieden wird.

Es ist weiterhin möglich, die der Kathode 6 benachbarte Wand 2 der Elektrolysezelle wenigstens teilweise mit einem Sichtfenster 14' auszustatten und in der Kathode 6 eine Aussparung 21 vorzusehen, durch welche die optische Achse 22 einer Videokamera gerichtet werden kann.

Zur Prüfung wird die mit einer Anodenplatte 8 bestückte Elektrolysezelle durch rasche Betätigung (Einschaltvorgang: ca. 0,15 s) der Schaltvorrichtung 15 mit der Gleichspannungsquelle 16 verbunden, so daß durch die Zelle ein elektrischer Strom fließt. Gleichzeitig werden die Lichtquellen 9, 10 eingeschaltet und die Videokamera 18 zur Aufnahme der sich auf der Aktivierungsschicht der Anode 8 bildenden Gasblasen 19 betätigt. Typischerweise dauert dieser Vorgang ca 1 s bei einer Stromdichte von 600 A/m². Nur bei einem solch kurzzeitigen Stromdurchfluß sind desaktivierte Bereiche der Aktivierungsschicht erkennbar; bei einer längeren Stromdurchflußzeit sind die desaktivierten Bereiche nicht mehr erkennbar, da dann die gesamte Aktivierungsschicht mit Gasblasen bedeckt ist.

Bei einer intakten Aktivierungsschicht ist gemäß Figur 2a eine gleichmäßige Verteilung der Gasblasen 19 auf der gesamten Anodenfläche erkennbar. Weist dagegen die Anodenfläche desaktivierte Bereiche auf, so sind diese gemäß Figur 2b anhand der fehlenden Gasblasenbildung erkennbar; die desaktivierten Bereiche sind dabei mit Bezugsziffer 20 bezeichnet.

## Patentansprüche

1. Verfahren zur Sichtprüfung einer mit einer Aktivierungsschicht versehenen, im wesentlichen ebenen Elektrode für elektrochemische Prozesse, insbesondere einer Anode für galvanische Verzinkungsanlagen für Stahlbänder, zur Ermittlung desaktivierter Oberflächenbereiche, dadurch gekennzeichnet, daß die Elektrode (8) in eine Elektrolysezelle (3) zwischen deren Anode (5) und Kathode (6) mit ihrer zu prüfenden Oberfläche der Kathode (6) zugewandt eingesetzt und die bei kurzzeitiger Spannungsbeaufschlagung auf der Aktivierungsschicht einsetzende Gasblasenentwicklung erfaßt wird.

2. Verfahren nach Anspruch 1, dadurch gekennzeichnet, daß die Gasblasen (19) beleuchtet werden und ihre Entwicklung mit Hilfe einer Kamera (18) aufgezeichnet wird.

3. Vorrichtung zur Durchführung des Verfahrens nach Anspruch 1 oder 2, dadurch gekennzeichnet, daß sie eine Elektrolysezelle mit Anode (5) und Kathode (6) und eine Schaltvorrichtung (15) zum kurzzeitigen Anlegen einer Spannangrquelle (16) und die Ansde und die kathode, sowie eine Halterung (7) für die zu prüfende Elektrode (8) aufweist und daß der Zellentrog (3) einen transparenten Bereich (14) zur Beobachtung der zu prüfenden Elektrodenoberfläche aufweist.

4. Vorrichtung nach Anspruch 3, dadurch gekennzeichnet, daß sie wenigstens eine Lichtquelle (9, 10) aufweist.

5. Vorrichtung nach Anspruch 4, dadurch gekennzeichnet, daß die Lichtquelle (9, 10) innerhalb des Troges (3) zwischen der Halterung (7) und der Kathode (6) der Elektrolysezelle angeordnet ist.

6. Vorrichtung nach Anspruch 5 dadurch gekennzeichnet, daß die Lichtquelle (9, 10) mit Kühlluft umströmt ist.

7. Vorrichtung nach Anspruch 3, dadurch gekennzeichnet, daß der Abstand zwischen der Halterung (7) und der Anode (5) kleiner ist als der zwischen Halterung (7) und Kathode (6).

8. Vorrichtung nach Anspruch 3, dadurch gekennzeichnet, daß der transparente Bereich (14) ein ebener Trogbereich ist, der zwischen Kathode (6) und Halterung (7) angeordnet ist.

9. Vorrichtung nach Anspruch 8, dadurch gekennzeichnet, daß der transparente Bereich (14) und die Oberfläche der zu prüfenden Elektrode (8) einen Winkel zwischen 20° und 80° einschließen.

10. Vorrichtung nach Anspruch 9, dadurch gekennzeichnet, daß der eingeschlossene Winkel zwischen 40° und 60° liegt.

11. Vorrichtung nach einem oder mehreren der Ansprüche 3, 8 bis 10, dadurch gekennzeichnet, daß außerhalb des Troges (3) in Nachbarschaft des transparenten Bereiches (14) eine Kamera (18) angeordnet ist.

12. Vorrichtung nach einem oder mehreren der Ansprüche 3 bis 11, dadurch gekennzeichnet, daß als Elektrolyt eine Natriumsulfatlösung eingesetzt wird.


## Claims

1. A method for the visual examination of a substantially flat electrode, provided with an activation layer, for electrochemical processes, in particular an anode for galvanizing plants for steel strips, for determining deactivated surface regions, characterised in that the electrode (8) is inserted into an electrolysis cell (3) between its anode (5) and cathode (6) with its surface which is to be examined facing the cathode (6) and the development of gas bubbles is detected which occurs with a brief application of voltage on the activation layer.

2. A method according to Claim 1, characterised in that the gas bubbles (19) are illuminated and their development is recorded by means of a camera (18).

3. A device for carrying out the method according to Claim 1 or 2, characterised in that it has an electrolysis cell with anode (5) and cathode (6,) and a switching device (15) for the brief connection of a voltage source (16) to the anode and to the cathode, and also has a mounting (7) for the electrode (8) which is to be examined, and that the cell trough (3) has a transparent region (14) for observing the electrode surface which is to be examined.

4. A device according to Claim 3, characterised in that it has at least one light source (9,10).

5. A device according to Claim 4, characterised in that the light source (9,10) is arranged within the trough (3) between the mounting (7) and the cathode (6) of the electrolysis cell.

6. A device according to Claim 5, characterised in that the light source (9,10) has cooling air flowing around it.

7. A device according to Claim 3, characterised in that the distance between the mounting (7) and the anode (5) is smaller than that between the mounting (7) and cathode (6).

8. A device according to Claim 3, characterised in that the transparent region (14) is a flat trough region, which is arranged between cathode (6) and mounting (7).

9. A device according to Claim 8, characterised in that the transparent region (14) and the surface of the electrode (8) which is to be examined form an angle of between 20° and 80°.

10. A device according to Claim 9, characterised in that the angle which is formed is between 40° and 60 °.

11. A device according to one or more of Claims 3, 8 to 10, characterised in that outside the trough (3) in the vicinity ot the transparent region (14), a camera (18) is arranged.

12. A device according to one or more of Claims 3 to 11, characterised in that a sodium sulphate solution is used as electrolyte.


**Revendications**

1. Procédé de contrôle visuel d'une électrode pour processus électrochimiques, cette électrode sensiblement plane étant munie d'une couche d'activation et étant notamment une anode pour installations de zingage de bandes d'acier par galvanoplastie, afin de déterminer les zones de surface désactivées, caractérisé par le fait que l'on insère l'électrode (8) dans une cellule d'électrolyse (3), entre l'anode (5) et la cathode (6) de cette cellule, la surface à contrôler étant tournée vers la cathode (6), et on observe ou enregistre le développement de bulles de gaz s'établissant sur la couche d'activation lors d'une brève application de tension.

2. Procédé selon revendication 1, caractérisé par le fait que les bulles de gaz (19) sont éclairées et leur développement est enregistré à l'aide d'une caméra (18).

3. Dispositif de mise en oeuvre du procédé selon revendication 1 ou 2, caractérisé par le fait qu'il présente une cellule d'électrolyse avec anode (5) et cathode (6) et un dispositif de commutation (15) pour l'application brève d'une source de tension (16) à l'anode et à la cathode, et présente un organe de maintien (7) pour le maintien de l'électrode à contrôler (8), et par le fait que le bac (3) de la cellule présente une zone transparente (14) pour l'observation de la surface d'électrode à contrôler.

4. Dispositif selon revendication 3, caractérisé par le fait qu'il présente au moins une source de lumière (9, 10).

5. Dispositif selon revendication 4, caractérisé par le fait que la source de lumière (9, 10) est disposée à l'intérieur du bac ou cuve (3), entre l'organe de maintien (7) et la cathode (6) de la cellule d'électrolyse.

6. Dispositif selon revendication 5, caractérisé par le fait que la source de lumière (9, 10) est balayée par un courant d'air de refroidissement.

7. Dispositif selon revendication 3, caractérisé par le fait que la distance entre l'organe de maintien (7) et l'anode (5) est plus petite que la distance entre organe de maintien (7) et cathode (6).

8. Dispositif selon revendication 3, caractérisé par le fait que la zone transparente (14) est une région plane du bac ou cuve, située entre cathode (6) et organe de maintien (7).

9. Dispositif selon revendication 8, caractérisé par le fait que la région transparente (14) et la surface de l'électrode à contrôler (8) forment un angle compris entre 20° et 80°.

10. Dispositif selon revendication 9, caractérisé par le fait que ledit angle est compris entre 40° et 60°.

11. Dispositif selon une ou plusieurs des revendications 3, 8 à 10, caractérisé par le fait qu'une caméra (18) est agencée à l'extérieur du bac ou cuve (3), au voisinage de la région transparente (14).

12. Dispositif selon une ou plusieurs des revendications 3 à 11, caractérisé par le fait que l'électrolyte utilisé est une solution de sulfate de sodium.

FIG.1

EP 0 369 103 B1

FIG.2 b

19

20

8

FIG.2 a

19

8